Europäisches Patentamt

European Patent Office

Office européen des brevets

(19)

(11) **EP 1 596 522 A2**

(12) **EUROPEAN PATENT APPLICATION**

(43) Date of publication:
**16.11.2005 Bulletin 2005/46**

(51) Int Cl.$^7$: **H04L 1/18**, H04L 1/00

(21) Application number: **05251058.3**

(22) Date of filing: **23.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **14.05.2004 JP 2004144325**

(71) Applicant: **FUJITSU LIMITED**
**Kawasaki-shi, Kanagawa 211-8588 (JP)**

(72) Inventors:
• **Suzuki, Masaaki, c/o Fujitsu Limited**
**Kawasaki-shi, Kanagawa 211-8588 (JP)**
• **Yano, Tetsuya, c/o Fujitsu Limited**
**Kawasaki-shi, Kanagawa 211-8588 (JP)**

(74) Representative: **Hitching, Peter Matthew et al**
**Haseltine Lake,**
**Imperial House,**
**15-19 Kingsway**
**London WC2B 6UD (GB)**

(54) **Apparatus and method for determining if transmitted data relates to a new transmission or a retransmission**

(57)    A mobile station utilizing the HSDPA system comprises a control unit (47) operable to utilize data $X_{rv}$ to determine whether the data received from a base station with the HS-PDSCH is related to the a new transmission or a re-transmission. Moreover, the control unit (47) also uses the $X_{nd}$ to determine whether the transmission is related to the new transmission or re-transmission.

Fig. 4

## Description

BACKGROUND OF THE INVENTION

1. Field of the Invention

The present invention relates to a communication apparatus and a controlling method for a re-transmission. This communication apparatus is utilized in the system, for example, the W-CDMA (UMTS) mobile communication system.

2. Description of the Related Art

Standardization of the W-CDMA system, which is considered as one of the 3$^{rd}$ generation mobile communication system, is now under the development in the 3GPP (3$^{rd}$ Generation Partnership Project). As a theme for the standardization, the HSDPA (High Speed Downlink Packet Access) is specified. This system can provide the maximum transmission rate of about 14 Mbps in the downlink.

The HSDPA adopts the adaptive modulation and coding (AMC) and adaptively switch, for example, the QPSK modulation scheme and the 16-level QAM scheme in accordance with the radio environment between the base station and the mobile stations.

Moreover, the HSDPA also adopts the H-ARQ (Hybrid Automatic Repeat reQuest) system. This H-ARQ is characterized in that when a mobile station has detected an error in the receiving data received from the base station, the data is re-transmitted from the base station responding to the request from the mobile station, while the mobile station executes the error correction decoding process using both already received data and the receiving data of the re-transmission. In the H-ARQ, as described above, if an error is detected, the gain of the error correction decoding is raised and the number of times of re-transmission is controlled by effectively utilizing the already received data.

The major radio channels used for the HSDPA include the HS-SCCH (High Speed-Shared Control Channel), HS-PDSCH (High Speed-Physical Downlink Shared Channel), and HS-DPCCH (High Speed-Dedicated Physical Control Channel).

The HS-SCCH, HS-PDSCH are shared channels in the downlink direction (namely, direction toward a mobile station from a base station), and the HS-SCCH is a control channel for sending various parameters of the data transmitted by the HS-PDSCH. As the various parameters, for example, the modulation type information which indicates the modulation scheme used for transmission by the HS-PDSCH, number of spreading codes assigned (number of spreading codes), and the information such as pattern of the rate matching for the transmitting data may be considered.

Meanwhile, the HS-DPCCH is a dedicated control channel in the uplink direction from a mobile station to a base station and is used to transmit the ACK signal and NACK signal to the base station from the mobile station in accordance with acknowledgment or non-acknowledgment of reception of the data received via the HS-PDSCH. If a mobile station has failed reception of the data (the CRC error is generated in the receiving data or the like), the base station executes the re-transmission control because the NACK signal is transmitted from the mobile station.

Moreover, the HS-DPCCH is also used by the mobile station having measured the receiving quality (for example, SIR) of the signal received from the base station to transmit the result of measurement to the base station as the CQI (Channel Quality Indicator). The base station determines, in accordance with the CQI received, the environment for the radio communication on the basis of the received CQI. When the communication environment is good, the modulation scheme is switched to the scheme for transmitting the data in the higher velocity. If the environment is no good, on the contrary, the modulation scheme is switched to the scheme for transmitting the data in the lower velocity.

Channel Format

Next, a channel format in the HSDPA will be described below.

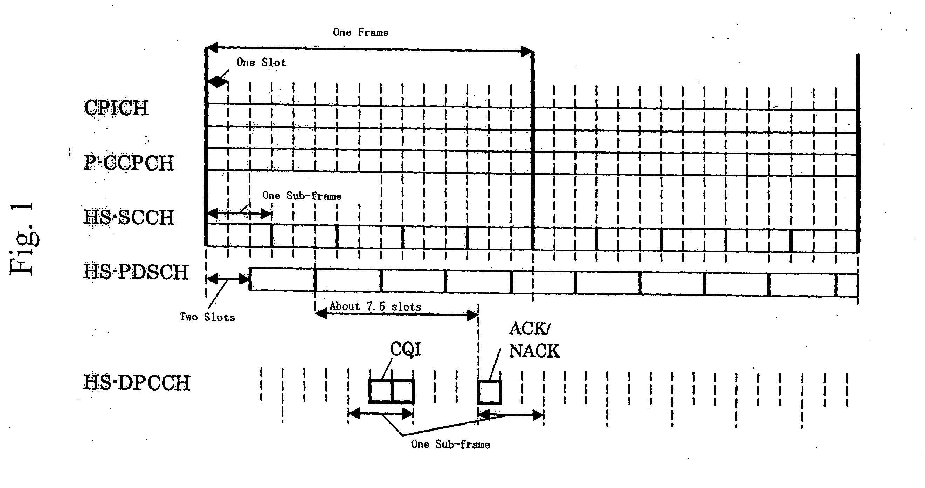

Fig. 1 is a diagram illustrating a channel format in the HSDPA. The W-CDMA introduces the code dividing multiplex system and each channel is therefore separated with the spreading code.

The channels not yet described will be described briefly first.

CPICH (Common Pilot Channel) and P-CCPCH (Primary Common Control Physical Channel) are respectively common channels in the downlink direction.

The CPICH is the channel used by a mobile station for estimation of channel condition, searching of cells, and timing reference of the other downlink physical channels in the same cell, and the channel used for transmitting the pilot signal. The P-CCPCH is the channel for transmitting the broadcasting information.

Next, timing relationship of channels will be described.

As illustrated in Fig. 1, one frame (10 ms) is formed of 15 slots in each channel. As described previously, since the CPICH is used as the reference of the other channels, the top of frames of the P-CCPCH and HS-SCCH channels are matched with the top of frame of the CPIH channel. Here, the top of frame of the HS-PDSCH channel is delayed by two slots from the HS-SCCH channel or the like to realize demodulation of the HS-PDSCH channel with the demodulating scheme corresponding to the received modulation type after the mobile station has received the modulation type information via the HS-SCCH channel. Moreover, the HS-SCCH and HS-PDSCH channels from one subframe with thee slots.

The HS-DPCCH channel is not synchronized with the CPICH channel but this channel is provided for the uplink direction and is based on the timing generated in the mobile station.

The channel format of the HSDPA channel has been briefly described above.

Next, contents and coding sequence of the data transmitted by the HS-SCCH channel will be described.

Data Transmitted by the HS-SCCH

Following data are transmitted by the HS-SCCH. Each data is used for receiving process of the HS-PDSCH transmitted with a delay of two (2) slots.

(1) $X_{ccs}$ (Channelization Code Set information)
(2) $X_{ms}$ (Modulation Scheme information)
(3) $X_{tbs}$ (Transport Block Size information)
(4) $X_{hap}$ (Hybrid ARQ Process information)
(5) $X_{rv}$ (Redundancy and constellation Version)
(6) $X_{nd}$ (New Data indicator)
(7) $X_{ue}$ (User Equipment identify)

The data (1) to (7) will be described below.

The data $X_{ccs}$ (1) is the data indicating the spreading code used for transmission of data with the HS-PDSCH (for example, the data indicating the combination of the number of multiple codes and code offset) and is formed of 7 bits.

The data $X_{ms}$ (2) is the data indicating that the modulation scheme used for the HS-PDSCH is any one of the QPSK and 16-level QAM and is formed of 1 bit.

The data $X_{tbs}$ (3) is the data used for calculating the transport block size (data size transmitted by one sub-frame of the HS-PDSCH) of the data transmitted by the HS-PDSCH and is formed of 6 bits.

The data $X_{hap}$ (4) is the data indicating the process number of the H-ARQ and is formed of 3 bits. A base station cannot determine acknowledgment or non-acknowledgement of reception to know whether the data has been received or not in the mobile station until the ACK or NACK signal is received. However, if the transmission of the new data block is delayed until the ACK or NACK signal is received, the transmission efficiency may be lowered. Therefore, in view of transmitting the new data block before reception of the ACK or NACK signal, the process number is defined to each data block to be transmitted with the sub-frame and the mobile station switches the receiving process in accordance with the process number. Namely, when the retransmission is requested, the base station gives the process number to each transmission block and transmits the data as $X_{hap}$ via the HS-SCCH under the condition that the same process number as that used for the preceding transmission must be given thereto.

Accordingly, the mobile station classifies the data received via the HS-PDSCH on the basis of the $X_{hap}$ received and performs combining or the like of the new data and re-transmission data by discriminating the new transmission and re-transmission based on the data $X_{nd}$ described in the item (6) within the flow of data with which the same process number is notified by the HS-SCCH.

The data $X_{rv}$ (5) is the data indicating the redundancy version (RV) parameter (s, r) and constellation version parameter (b) in the re-transmission of the HS-PDSCH and is formed of 3 bits.

In particular, the data $X_{rv}$ indicates the following parameters when the transmission is executed in the 16-level QAM method with the adaptive modulation.

$$(s, r, b) = (1, 0, 0), \text{ when } X_{rv} = 0$$

$$(s, r, b) = (0, 0, 0), \text{ when } X_{rv} = 1$$

$$(s, r, b) = (1, 1, 1), \text{ when } X_{rv} = 2$$

$$(s, r, b) = (0, 1, 1), \text{ when } X_{rv} = 3$$

$$(s, r, b) = (1, 0, 1), \text{ when } X_{rv} = 4$$

$$(s, r, b) = (1, 0, 2), \text{ when } X_{rv} = 5$$

$$(s, r, b) = (1, 0, 3), \text{ when } X_{rv} = 6$$

$$(s, r, b) = (1, 1, 0), \text{ when } X_{rv} = 7$$

The data $X_{rv}$ indicates the following parameters when the transmission is executed in the QPSK method with the adaptive modulation.

$$(s, r) = (1, 0), \text{ when } X_{rv} = 0$$

$$(s, r) = (0, 0), \text{ when } X_{rv} = 1$$

$$(s, r) = (1, 1), \text{ when } X_{rv} = 2$$

$$(s, r) = (0, 1), \text{ when } X_{rv} = 3$$

$$(s, r) = (1, 2), \text{ when } X_{rv} = 4$$

$$(s, r) = (0, 2), \text{ when } X_{rv} = 5$$

$(s, r) = (1, 3)$, when $X_{rv} = 6$

$(s, r) = (0, 3)$, when $X_{rv} = 7$

Here, s is the bit indicating whether the systematic bit has the priority or not in the rate matching process which will be described later. For example, when s = 1, the systematic bit has the priority and when s = 0, the systematic bit does not have the priority. In addition, r indicates a pattern of the bits as the object of the puncture and repetition processes at the time of rate matching process, while b indicates a pattern of the constellation re-arrangement.

At the time of re-transmission, since it is desirable to change the bits to be transmitted or alter the constellation re-allocation, considering the combining in the receiving side, the data $X_{rv}$ is used through rotation in the data 0 to 7. Moreover, since it is not required to alter the data $X_{rv}$ for each initial transmission time, the initial value for each new transmission may be kept constant.

The data Xnd (6) is the data indicating whether the transmitting block of the HS-PDSCH is the new block or re-transmission block and is formed of 1 bit. For example, the bit is switched to 1 from 0 or to 0 from 1 for the transmission of new block. However, the identical value is used without switching for the re-transmission.

For example, when the new transmission, re-transmission, new transmission, re-transmission, re-transmission, and new transmission are conducted sequentially, the bit changes like 1, 1, 0, 0, 0, 1.

The data $X_{ue}$ (7) is the data indicating the identification information of a mobile station and is formed of 16 bits.

Coding of Data Transmitted by HS-SCCH

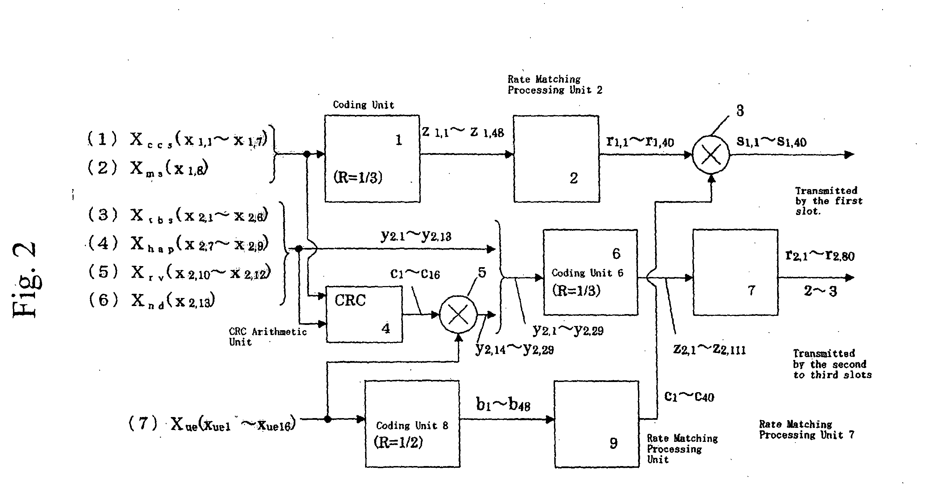

Fig. 2 illustrates the coding sequence (coding apparatus) of each data of (1) to (7) transmitted by the HS-SCCH and is mainly executed in a base station.

In Fig. 2, numeral 1 designates a coding unit; 2, a rate matching processing unit; 3, a multiplier; 4, a CRC arithmetic unit; 5, a multiplier; 6, a coding unit; 7, a rate matching processing unit; 8, a coding unit; and 9, a rate matching processing unit.

Next, operations of each block will be described.

The data (1) Xccs ($x_{1,1}$ to $x_{1,7}$) expressed with 7 bits and the data (2) Xms ($x_{1,8}$) are inputted to the coding unit 1 as the data of 8 bits in total. The former number of subscript means that the data relates to the data transmitted by the first slot (part), while the latter number partitioned by the comma (,) indicates bit number.

The coding unit 1 adds the tail bit of 8 bits to the input data and executes the convolutional encoding process in the coding rate of 1/3 to 16 bits in total. Therefore, the encoded data becomes the data of 48 bits in total and are given to the rate matching processing unit 2 as $Z_{1,1}$ to $Z_{1,48}$. The rate matching processing unit 2 executes the puncture and repetition processes to the predetermined bits and outputs the data ($r_{1,1}$ to $r_{1,40}$) after adjustment to the number of bits (40 bits, in this case) to be accommodated within the first slot (part).

The data from the rate matching processing unit 2 is outputted as the s1,1 to s1,40 through the multiplication with $c_1$ to $c_{40}$ by the multiplier 3 and are transmitted in the first slot (first part) which is the top slot of one sub-frame in the HS-SCCH of Fig. 1.

Here, the data $c_1$ to $c_{40}$ have been obtained by obtaining $b_1$ to $b_{48}$ through the convolutional encoding process in the coding rate of 1/2 of the data (7) $X_{ue}$ ($X_{uel}$ to $X_{uel6}$) after addition of the tail bit of 8 bits thereto and by further conducting, in the rate matching processing unit 9, the bit adjustment to above data in the same manner as that in the rate matching processing unit 2.

Meanwhile, the data (3)$X_{tbs}$ ($x_{2,1}$ to $X_{2,6}$) of 6 bits, (4)$X_{hap}$ ($X_{2,7}$ to $X_{2,9}$), (5)$X_{rv}$ ($X_{2,10}$ to $X_{2,12}$) of 3 bits, and (6)$X_{nd}$ ($x_{2,13}$) of 1 bit are changed to the data $y_{2,1}$ to $y_{2,13}$ of 13 bits in total and are then inputted to the coding unit 6 as the data $y_{2,1}$ to $y_{2,29}$ of 29 bits in total with addition of the data $y_{2,14}$ to $y_{2,29}$ of 16 bits.

Here, the data $y_{2,14}$ to $y_{2,29}$ have been obtained by conducting the CRC arithmetic process to the data (1) to (6) of 21 bits in total in the CRC arithmetic unit 4 and then multiplying the data (7)$X_{ue}$ ($X_{uel}$ to $X_{uel6}$) to the data c1 to c16 as the result of arithmetic process.

The data $y_{2,1}$ to $y_{2,29}$ inputted to the coding unit 6 are encoded, after addition of the tail bit of 8 bits, by the convolutional encoding method in the coding rate of 1/3 and are then inputted to the rate matching processing unit 7 as the data $Z_{2,1}$ to $Z_{2,111}$ of 111 bits.

The rate matching processing unit 7, input the data $Z_{2,1}$ to $Z_{2,111}$ by the coding unit 6, outputs the data $r_{2,1}$ to $r_{2,80}$ of 80 bits with the process such as the puncture process described above and these data $r_{2,1}$ to $r_{2,80}$ are transmitted by the second and third slots (second part) in one sub-frame of the HS-SCCH of Fig. 1.

As described above, the data are transmitted through discrimination of the individual slots, for example, the data (1), (2) are transmitted in the first slot (first part), while the data (3) to (6), in the second to third slots (second part). However, since the CRC arithmetic process is executed in common and the result of CRC arithmetic process is transmitted in the second part, a receiving error can be detected by perfectly receiving the data in both first and second parts.

Moreover, since the data (7) Xue is multiplied to the data to be transmitted by the first slot (first part) with the multiplier 3 after the convolutional encoding by the coding unit 1, when the data destined only to the other stations is received with the first slot, a degree of likelihood generated in the decoding process becomes smaller than that of the data destined to the own station. If the path-metric value is adopted to evaluate the degree of likelihood, the path-metric of the data destined to the other mobile station becomes larger than that of the data destined to the own mobile station. Therefore, it can be understood that possibility for the data not destined to the own station is higher through comparison between the degree of likelihood and the reference value.

Coding of Data Transmitted by the HS-PDSCH

Next, the processes up to transmission of transmitting data via the HS-PDSCH will be described with reference to the block diagram.

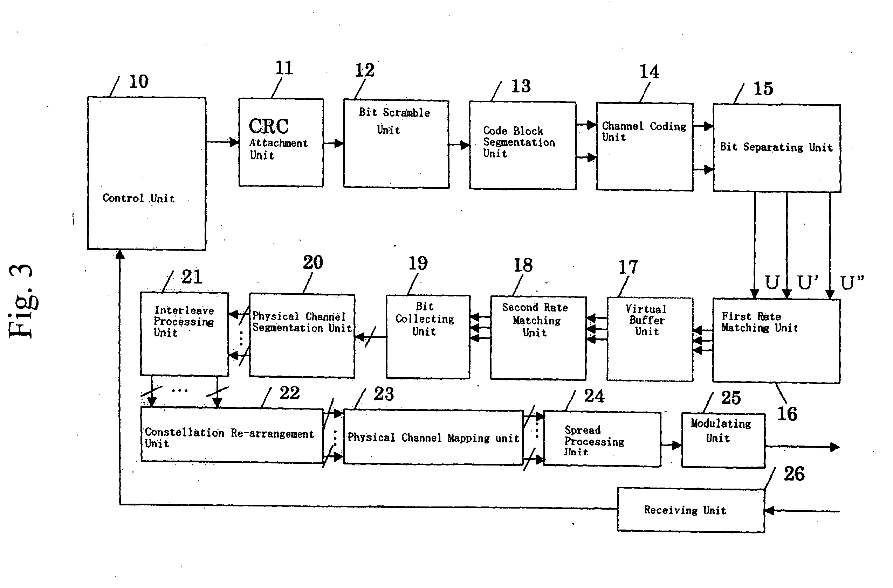

Fig. 3 illustrates a transmitting apparatus.

As an example of the transmitting apparatus, a transmitting apparatus (radio base station) of the W-CDMA communication system corresponding to the HSDPA described above will be described. This apparatus can also be adapted to a transmitting apparatus of the other communication systems.

In the figure, numeral 10 designates a control unit for sequentially outputting the transmitting data (data transmitted in one sub-frame) to be transmitted via the HS-PDSCH and also controlling each unit (11 to 26). Each value of the data (1) to (7) described with reference to Fig. 2 is given by the control unit 10.

Since the HS-PDSCH is the shared channel, the transmitting data to be transmitted sequentially are allowed to be destined to difference mobile stations.

Numeral 11 designates a CRC attachment unit for executing the CRC arithmetic process to the sequentially inputted transmitting data (data transmitted within the same radio frame) and adding the result of CRC arithmetic process to the last part of the transmitting data. Numeral 12 designates a bit scrambling unit which forms the random transmitting data by scrambling, in unit of bit, the transmitting data to which the result of the CRC arithmetic process is added.

Numeral 13 designates a code block segmentation unit which segments (into the two blocks) the input transmitting data having completed bit scrambling if this transmitting data exceeds the predetermined data length in view of preventing increase in amount of arithmetic process of the decoder in the receiving side. In Fig. 3, the input data length exceeds the predetermined data length and the data segmented to the two blocks (segmented to the first data block and second data block) are outputted. The number of segmentations other than 2 may naturally be selected and moreover the transmitting data can also be segmented in different data lengths in place of the segmentation in equal data length.

Numeral 14 designates a channel-coding unit for individually executing the error correction encoding to the segmented data. As the channel-coding unit 14, the turbo encoder is preferably used here.

The first output includes, for the first block, the important systematic bits (U) which is the identical data to the data as the encoding object, the first parity (redundant) bits (U') obtained by convolutional encoding of the systematic bits (U) and the second parity bit s (U") obtained by the similar convolutional encoding of the systematic bits after the interleave process. In the same manner, the second output includes, for the second block, the systematic bits (U), first parity bits (U') and second parity bits (U").

Numeral 15 designates a bit separation unit for separately outputting the systematic bits (U) of the first block and second block inputted serially from the channel coding unit 14 (turbo encoder), the first parity bits (U') and the second parity bits (U").

Numeral 16 designates a first rate matching unit for executing the rate matching process such as the puncture process (thinning) to the input data to provide the input data (all data of the segmented blocks when the data is segmented to a plurality of blocks) to be stored in the predetermined region of the virtual buffer unit 17 of the subsequent stages.

Numeral 17 designates a virtual buffer unit which is controlled by the control unit 10 to set a region corresponding to the receiving process capability of the mobile station as the transmission object and stores the data having completed the rate matching process by the first rate-matching unit 16. During the re-transmission, the processes to be executed by the CRC attachment unit 11 to the first rate matching unit 16 can be eliminated by outputting the stored data, but when it is requested to change the coding rate during the re-transmission or the like, it is desirable that the transmitting data stored by the control unit 10 is outputted again without use of the stored data. Here, it is also possible that the buffer is not provided as the virtual buffer unit 17. In this case, the re- transmission data is outputted again from the control unit 10.

Numeral 18 designates a second rate-matching unit for adjusting the data to the data length designated by the control unit 10 to accommodate the data in one sub-frame. The data length of input data is adjusted to provide the designated data length by executing the puncture process (thinning) and repetition process (repeating).

This second rate-matching unit 18 executes the rate matching process in accordance with the RV parameter described previously.

Namely, when "s" determined by the RV parameter equals to 1 the rate matching process is executed in order to leave the systematic bits as much as possible. While when s = 0, it is allowed that more parity bits are left by reducing the systematic bits. Moreover, the puncture process and rate matching process are executed with the pattern conforming to the value of "r" determined by the RV parameter.

Numeral 19 designates a bit collection unit for arranging the data from the second rate-matching unit 19 into a plurality of bit sequences. Namely, a plurality of bit sequences for indicating the signal points on the respective phase planes can be outputted by arranging both first block data and second block data with the predetermined bit arrangement method. In this embodiment, each bit sequence is formed with four (4) bits because the 16-level QAM modulation scheme is adopted. When the 64-level QAM modulation scheme is adopted, the each bit sequence is formed with six (6) bits. When the QPSK modulation scheme is adopted, the each bit sequence is formed with two (2) bits.

Numeral 20 designates a physical channel segmentation unit which can output the segmented bit sequences to the systems in the same number as the number of spreading codes (number of codes) notified from the control unit 10. Namely, this unit can provide an output by sequentially sharing the input bit sequences to the systems 1 to N, when the number of spreading codes in the transmitting parameters notified by the control unit 10 is N.

Numeral 21 designates an interleaving unit for outputting the bit sequences of the N systems by executing the interleaving process to such bit sequences.

Numeral 22 designates a constellation re-arrangement unit for 16-QAM which can execute the re-arrangement of the bits within the bit sequences for each input bit sequence. For example, it is also possible that at the time of the first transmission, each input bit is outputted in direct without any process, and during the re-transmission in the H-ARQ described above, re-arrangement of bits can also be executed. The re-arrangement of bits means, for example, the process to replace the upper bits with the lower bits. Accordingly, it is preferable to perform the replacement of the bits depending on the equal rule for a plurality of bit sequences.

Numeral 23 designates a physical channel-mapping unit for sharing the bit sequences of the N systems in the subsequent stage into the corresponding spreading unit of the spreading process unit 24 in the subsequent stage.

Numeral 24 designates a spreading process unit which is provided with a plurality of spreading units to respectively output the corresponding I, Q voltages on the basis of each bit of the N systems and also provide an output by executing the spreading process using different spreading codes.

Numeral 25 designates a modulating unit for combining the signals spread by the spreading process unit 24, executing, on the basis of the combined signals, the amplitude phase modulation such as 16-level QAM modulation scheme, amplifying the signal with a variable gain amplifier, and then transmitting the signals as the radio signal after such signal is outputted to the antenna through frequency conversion into the radio signal.

In the HSDPA, since the signals to the other mobile stations may be multiplexed with the spreading codes even in the sub-frames of the same timing, it is preferable that a plurality of sets of the units 10 to 25 and variable gain amplifier or the like (referred to as the transmission set) may be provided and the signal is transmitted to the antenna side after the common frequency conversion through the combining of the output signals from the variable gain amplifiers. Since the signals must be separated depending on the spreading code at the receiving side, each spreading process unit 24 use different spreading code respectively.

Numeral 26 designates a receiving unit which receives the signal from the mobile station via the HS-DPCCH and then gives the ACK, NACK signals and the CQI or the like to the control unit 10.

As described above, when the ACK signal is received, the next new data is then transmitted. However, if the NACK signal is received or any response cannot be received (called as DTX state), the control unit 10 executes the re-transmission control to request the re-transmission of the data transmitted. The re-transmission is limited to the preset maximum number of times of re-transmission. If the ACK signal cannot be received from a mobile station even when the number of re-transmissions reaches the maximum number of times of re-transmission, the control unit 10 switches the transmission to the transmission of next new data.

When the maximum number of times of re-transmission is not defined, the timer is started from the new transmission. When the ACK signal cannot be received even after the predetermined time has passed, the present transmission can also be switched to the transmission of the next new data.

Operations of each unit have been described above.

Contents related to the HSDPA are disclosed, for example, in the following non-patent documents 1 and 2. Non-patent document 1 is "3G TS 25.212 (Third Generation Partnership Project: Technical Specification Group Radio Access Network; Multiplexing and Channel Coding (FDD))". Non-patent document 2 is "3G TS 25.214 (Third Generation Partnership Project: Technical Specification Group Radio Access Network; Physical layer procedures (FDD))".

According to the background of the present invention described above, a receiving apparatus can determine whether the receiving data (HS-PDSCH) is the data of the new transmission or the re-transmission with the data ($X_{nd}$) for identifying the new transmission and re-transmission, but the receiving apparatus sometimes fails to receive this data ($X_{nd}$).

For example, when the data Xnd is transmitted through the change to 000011110 for both new transmission and re-transmission, if a mobile station fails to receive the HS-SCCH of the part 1111 (including the case where the HS-SCCH becomes the CRC error because this data cannot be received completely), this mobile station judges that re-transmission has been conducted for four times because it has received the data 00000 from a base station. In this case, when the H-ARQ is employed, this new data is erroneously combined as the data already received.

Accordingly, one of the objects of the present invention is to enhance the detection accuracy of the new transmission and re-transmission.

Moreover, another object of the present invention is to enable use of the redundant version information and constellation re-arrangement information ($X_{rv}$) which will change during new transmission and re-transmission for the new transmission and re-transmission.

It can also be appreciated as one of the objects of the present invention that the present invention can also provide the effects, in addition to those described above, which can be derived from respective profiles indicated as the preferred embodiments thereof and cannot be attained with the prior art.

SUMMARY OF THE INVENTION

The present invention uses a mobile station accommodated to the HSDPA system, said mobile station comprising: a control unit for utilizing the data $X_{rv}$ received from a base station for determining whether the data transmitted by the HS-PDSCH relates to the new transmission or the re-transmission.

Moreover, said data $X_{rv}$ includes the redundant version information and the constellation version.

Moreover, said control unit uses said data $X_{rv}$, in addition to the $X_{nd}$, as the parameter for said determination.

Moreover, the mobile station further comprises a storage unit for storing the received data $X_{rv}$, wherein said control unit estimates the $X_{rv}$ transmitted at the time of the new transmission based on the stored $X_{rv}$ and then uses said $X_{rv}$ for said determination.

Moreover, a value of said $X_{rv}$, when the new transmission is indicated with the $X_{nd}$, which is the bit indicating the new transmission or re-transmission, is used for said estimation.

Moreover, said storage unit discriminates and stores the $X_{rv}$ for each base station apparatus or base station control apparatus or routing apparatus, and said control unit determines under the control of which apparatus among the base station, base station control apparatus, and routing apparatus the own station is placed and makes said determination in accordance with the $X_{rv}$ which has been estimated as that of the new transmission on the basis of the $X_{rv}$ corresponding to the determined apparatus.

The present invention uses a mobile station accommodated to the HSDPA system, said mobile station comprising: a control unit for estimating the transmission of new data because the received $X_{rv}$ has the particular value, wherein said control unit is also provided with the function to detect a rotation of the $X_{rv}$ on the basis of the received $X_{rv}$ and to regulate, when such detection is executed, so that the $X_{rv}$ is not estimated as the data to be related to the new data because the $X_{rv}$ has the particular value.

The present invention uses a mobile station corresponding to the HSDPA system, said mobile station comprising; a control unit for discriminating whether the data received via the HS-PDSCH relates to the new transmission or re-transmission on the basis of the number of times of continuous transmissions of the NACK signal.

Moreover, the number of times of continuous transmissions of said NACK signal means the number of times (N) of continuous transmissions of the NACK signal during the period up to the reception of the next new data from the reception of the new data or the number of times obtained by subtracting one (1) from above number of times (N).

The present invention uses a mobile station accommodated to the HSDPA system, said mobile station comprising; a control unit processing the data of HS-PDSCH as a new transmission when it is assumed that the result of determination for new transmission and re-transmission based on the $X_{nd}$ received from the base station is different from the result of determination for the new transmission and re-transmission based on the $X_{rv}$ received from the base station or that an error exists in the $X_{nd}$.

The present invention uses a mobile station for detecting transmission of the next new data from a change in a predetermined bit and detecting re-transmission of the data because any change is not detected in the predetermined bit, said mobile station comprising; a control unit for determining whether the received data relates to the new transmission or re-transmission on the basis of certain bits, in addition to the predetermined bits, which are always identical when the new data is transmitted, change to the other bits when the data is re-transmitted.

The present invention uses a base station accommodated to the HSDPA system notifying to a mobile station that the data should be newly transmitted or re-transmitted with the $X_{nd}$, said base station comprising; a detecting means for detecting that the condition in which neither the ACK signal nor the NACK signal can be received from a mobile station is continued until the transmission of the next new data even when transmission of the new data is notified by the $X_{nd}$; and a control unit for controlling, upon said detection, the transmission so that the $X_{nd}$ is transmitted without any change thereof when the next new data is transmitted.

The present invention uses a base station for notifying the transmission of new data to a mobile station by changing a bit and also notifying the re-transmission to a mobile station without change of the bit, comprising; a detecting means for detecting that the condition in which neither the ACK signal nor the NACK signal can be received from a mobile station is continued until the transmission of the next new data even when transmission of the new data is notified by the change in the bit; and

a control unit for controlling, upon said detection, the transmission so that the bit are transmitted without any change thereof when the next new data is transmitted.

According to the receiving apparatus of the present invention, detection accuracy of the new transmission and re-transmission can be improved.

Moreover, according to the receiving apparatus of the present invention, the redundant version information and constellation re-arrangement information $(X_{rv})$ which are changed for new transmission and re-transmission can be used for detection of the new transmission and re-transmission.

BRIEF DESCRIPTION OF THE DRAWINGS

Fig. 1 diagrammatically shows a channel format in the HSDPA.

Fig. 2 diagrammatically shows the coding unit of the HS-SCCH.

Fig. 3 diagrammatically shows a transmitting apparatus (radio base station).

Fig. 4 diagrammatically shows a radio apparatus (mobile station) of the present invention.

Fig. 5 shows a flow of determination for new transmission and re-transmission using the data $X_{rv}$.

Fig. 6 shows the re-transmission control in the normal condition (when no error is detected in the reception of the HS-SCCH).

Fig. 7 shows a problem in the re- transmission control operation when a burst error is generated in the HS-SCCH.

Fig. 8 shows the re-transmission control operation when a burst error is generated in the HS-SCCH.

DETAILED DESCRIPTION OF THE PREFERRED EMBODIMENTS

The preferred embodiments of the present invention will be described with reference to the accompanying drawings.

Description of the First Embodiment

As described previously, the second to third slots of one sub-frame transmitted by the HS-SCCH include the data Xrv of item (5) and attention is paid in this embodiment to the data Xrv of item (5).

The data Xrv indicates, as described previously, the redundant version (RV) parameter (r, s) and the constellation version parameter (b) during the transmission of the HS-PDSCH. For first transmission these parameters are set to predetermined fixed value but for each re-transmission these parameters are changed to different value.

Accordingly, the data Xrv is used for identifying the new transmission and re-transmission.

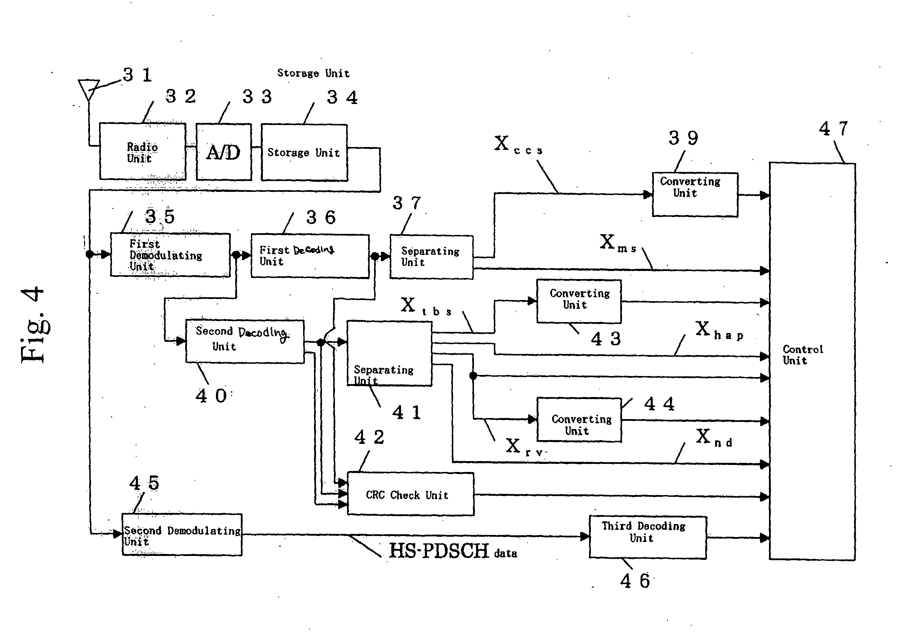

Fig. 4 is a diagram illustrating the communication apparatus of the present invention.

As an example of the radio apparatus, a mobile station in the W-CDMA communication system corresponding to the HSDPA will be described. This mobile station can also be adapted to the communication apparatus in the other communication system.

In Fig. 4, numeral 31 designates an antenna; 32, a radio unit for downconversion or the like for the radio frequency signal; 33, an A/D converting unit for converting the analog signal converted to the intermediate frequency signal or the like to the digital signal; 34, a storage unit for storing the receiving signal converted to the digital signal by the A/D converting unit; 35, a first demodulating unit for the demodulation process (orthogonal detection, despreading process or the like) of the HS-SCCH; 36, a first decoding unit for decoding the first slot (first part) of the HS-SCCH. As a decoder, it is preferable to use a Viterbi decoder.

Numeral 37 designates a separating unit for separating Xccs and Xms included in the first slot; 39, a converting unit giving the corresponding P value and O value to the control unit 47 on the basis of Xccs.

Numeral 40 designates a second decoding unit for decoding the second and third slots (second part) of the HS-SCCH. As the decoding unit, it is preferable to use the Viterbi decoder.

Numeral 41 designates a separating unit for separating and outputting the data Xtbs, Xhap, Xrv, and Xnd included in the second and third slots (second part).

Numeral 43 designates a converting unit for converting the data to the corresponding data length information on the basis of Xtbs and then giving such data to the control unit 47; 44, a converting unit for converting the data to the information such as the corresponding rate matching parameter or the like on the basis of Xrv and then giving such data to the control unit 47.

Numeral 45 designates a second demodulating unit for executing demodulating process such as orthogonal detection, despreading or the like for the signal transmitted via the HS-PDSCH (the detection system and the number of spreading codes used for despreading conform to the data of the first part in the just preceding sub-frame of the HS-SCCH); 46, a third decoding unit for executing the decoding process such as the turbo decoding or the like to the data of HS-PDSCH.

The mobile station as the radio apparatus illustrated in Fig. 4 is provided with a transmitting unit for outputting the signals such as CQI, ACK, and NACK from the control unit 47 and then transmitting these signals. The transmitting unit can transmit the signal as the radio frequency signal from the antenna 31 but it is not illustrated.

Next, operations of the radio apparatus of Fig. 4 will be described.

The mobile station in the communicating condition by utilizing the HSDPA is required first to periodically receive the HS-SCCH because the HS-PDSCH is the shared channel and to check whether the data to own station should be transmitted by the HS-PDSCH or not.

Therefore, the mobile station receives a signal with the antenna 31, converts the signal down-converted by the radio unit 32 to the digital signal, and stores the signal to the storage unit 34 and also inputs the digital signal to the first demodulating unit 35. The first demodulating unit despreads simultaneously, for example, the receiving signal using the four kinds of spreading codes because this demodulating unit is the demodulating unit for demodulation of the HS-SCCH and then inputs the data (first part) after the despreading to the first decoding unit 36. The first decoding unit 36 executes the decoding process with the Viterbi decoding method or the like after multiplying c 1 to c40 (these are similar to that in the base station and are generated within the mobile station through the processes, which are also conducted on the basis of the data Xue (7), identical to that in the coding unit 8 and rate matching processing unit 9 and then inserting the data in the degree of likelihood of 0 to the bit portions deleted (punctured) by the rate matching process in the rate matching processing unit 2. Here, the data in the degree of likelihood of 0 is used to provide the equal influence on the determination of 1 and 0 in the decoding process.

The data decoded by the first decoding unit 36 is separated into Xccs and Xms with the separating unit 37. The Xccs of (1) is then inputted to the converting unit 39 and is notified to the control unit 47 through conversion into the code information to be used for HS-PDSCH.

Next, second and third slots (second part) of the HS-SCCH and the decoding process of the HS-PDSCH will also be described briefly.

The second decoding unit 40 executes the decoding process for the second and third slots and gives the result of decoding to the separating unit 41 and CRC check unit 42. The separating unit 41 separates the second and third slots inputted to Xtbs, Xhap, Xrv, and Xnd and then outputs these separated data. In regard to the data Xtbs, the converting unit 43 can recognize the data length thereof within one sub-frame to be transmitted by the HS-PDSCH by giving the data length information corresponding to the input data to the control unit 47.

Moreover, the data Xhap is given in direct as the process number to the control unit 47. The control unit 47 determines, as described previously, that the data block transmitted by the HS-PDSCH should be processed as any process.

The data Xrv is converted to "s", "r", "b" by the converting unit 44 through the correspondence described previously and is then given to the control unit 10 for identifying the rate-matching pattern and constellation version.

Determination of New Transmission and Re-Transmission Using $X_{rv}$

Moreover, in this embodiment, the new transmission and re-transmission are identified using the data $X_{rv}$. The base station changes the data portion to be transmitted via the HS-PDSCH and changes the constellation arrangement to that preferable to the systematic bits by changing the data Xrv (for example, rotated among 0 to 7) during the re- transmission but the Xrv for the new transmission has a certain equal fixed value (for example, Xrv = 0) because it is not required to change the value of Xrv for each new transmission.

Therefore, the control unit 47 stores this particular value (for example, Xrv = 0) or the value other than this particular value. When the received Xrv is detected as the particular value (Xrv = 0), the control unit 47 determines the transmission is the new transmission (determines as not the re-transmission). Moreover, when the received Xrv is detected as not the particular value, the control unit 47 does not determine the new transmission (determines as the re-transmission).

If the particular value is different for each communication provider serving a mobile communication, it is also possible that the particular values are previously stored for each communication provider, the provider is selected on the basis of the network information (notifying information or the like) transmitted from the base station, and the corresponding particular value is read and used.

In some cases, the Xrv used for new transmission has the particular value but the mobile station does not store such particular value.

In this case, the control unit 47 of the mobile station stores the history of received $X_{rv}$ (or s, r, b) and identifies the $X_{rv}$ for the new transmission on the basis of the stored $X_{rv}$.

As the identifying method, for example, a value of the $X_{rv}$ received most frequently is identified as the $X_{rv}$ for the new transmission. The reason is that the $X_{rv}$ for the new transmission has the highest appearing rate as a result because the $X_{rv}$ is used through rotation for every re-transmission and the re-transmission is sometimes not conducted because the transmission is successfully completed only with single new transmission.

For improvement in the identifying accuracy, reference to the data Xnd at the time of identifying is preferable. Namely, the data Xrv is used (or stored) in case that the Xnd indicates the new transmission.

But it is possible for determination whether the transmission is new or re-transmission to become an error. Preferably plurality of values of Xrv are stored when the new transmission has been determined based on the Xnd and the values of Xrv stored most frequently are stored as the particular values and are then used as described above.

Following problems are sometimes generated when the Xrv which has been simply stored most frequently is used and the new transmission is determined by receiving the particular value of Xrv.

For example, when a value of the maximum number of times of re-transmission is large or time up to the switching to the transmission of the next new data is long, then the $X_{rv}$ has rotated once and the particular value is transmitted again even at the time of re-transmission. In that case the transmission which should be determined as the re-transmission is determined as the new transmission.

Therefore, the control unit 47 of the mobile station preferably not only stores simply the $X_{rv}$ but also stores the history on the time series basis. Based on the history information stored, a series of variation patterns of $X_{rv}$ until returning again to the $X_{rv}$ of the new transmission starting from the Xrv of the new transmission are extracted and the sequence of such variation patterns are also stored. When a rotation of the received Xrv is detected through comparison of the variation of received Xrv with the variation patterns, the next received Xrv is preferably determined as that related to the re-transmission (or new transmission and re-transmission is not determined using Xrv) without determination of the new transmission even if the next received Xrv is identical to that of the new transmission.

Here, when the Xrv is provided in eight kinds and is already known by the mobile station, the new transmission is not determined (or new transmission or re-transmission is not determined using the Xrv) even if the eight kinds of received Xrv are received continuously in order and the next received Xrv is identical to the Xrv for the new transmission.

Moreover, it is possible for the Xrv used for new transmission to be different in each base station. In another case the $X_{rv}$ used for new transmission is different in each base station group controlled by different RNC (base station control apparatus) respectively. In another case the $X_{rv}$ used for new transmission is different in each base station group under the different MMS (routing apparatus such as exchange) or the different communication provider.

In this case, at the time of detecting the particular values of $X_{rv}$ with reference to the $X_{nd}$, the data $X_{rv}$ are discriminated in accordance with the base station number, RNC (base station control apparatus) identifying information, MMS (routing apparatus of exchange or the like) identifying information, and communication provider identifying information and are then stored respectively. Moreover, the values appearing most frequently thereof are stored for each base station, RNC (base station control apparatus), MMS (routing apparatus such as exchange), and communication provider.

Next, the Xnd is formed of the bits indicating that the data transmitted by the corresponding HS-PDSCH relates to the new transmission or re-transmission and are given in direct to the control unit 47.

As described previously, the new transmission and re-transmission can be identified with the Xrv, but it may also be identified with both Xnd and Xrv.

Namely, when the Xnd indicates the new transmission, the transmission is determined in direct as the new transmission.

Meanwhile, when the Xnd indicates the re-transmission, it is determined whether the Xrv indicates the new transmission or not. When the Xrv indicates the new transmission, the transmission is determined as the new transmission. If the Xrv indicates the re-transmission, the transmission is determined as the re-transmission.

When the Xnd is transmitted through variation as 000011110 and the mobile station fails reception of the HS-SCCH of the 1111 portion (including the case where the HS-SCCH generates a CRC error, if reception is completely impossible), then the re-transmission is determined for the last transmission based on $X_{nd}$ (specially based on the last $X_{nd}$).

But if the Xrv is used also for determination whether the transmission is new transmission or re-transmission, then such error is corrected and the new transmission is detected correctly for the last transmission because the Xrv for the last transmission indicates the new transmission.

As described above, the new transmission and re- transmission can be determined only with the Xrv and such determination can also be realized on the basis of both Xnd and Xrv.

Both the CRC bits calculated by the CRC arithmetic process in the CRC arithmetic unit 4, wherein the CRC bits is included in the second and third slots (second part), and the data of first to third slots (first and second part) as the object of the CRC arithmetic process in the transmitting side are inputted to the CRC check unit 42. The result obtained by the CRC arithmetic process for the CRC arithmetic process object is compared with the received CRC bits in the CRC check unit 42. Accordingly, the CRC-error and no CRC-error are checked in accordance with the matching or mismatching in such comparison.

The CRC check result is given to the control unit 47 and if an error is detected by the CRC check, it is possible to control the operations not to execute the subsequent operations of each unit in regard to the HS-PDSCH.

The second demodulating unit 45 performs the demodulation and outputs the demodulation result when no error is detected in the CRC check of HS-SCCH, and gives the decoded data to the control unit 47 by sequentially decoding the receiving data as the individual process for each process number notified by the HS-SCCH.

The control unit 47 reforms the data on the basis of the information included in the data decoded individually for each process number and reproduces the transmitting data in order to output these data to a display unit and an audio output unit or the like not illustrated.

The mobile station is also provided with a transmitting unit although not illustrated and is capable of transmitting, as described above, the ACK, NACK, and CQI signals in accordance with the instruction from the control unit 47.

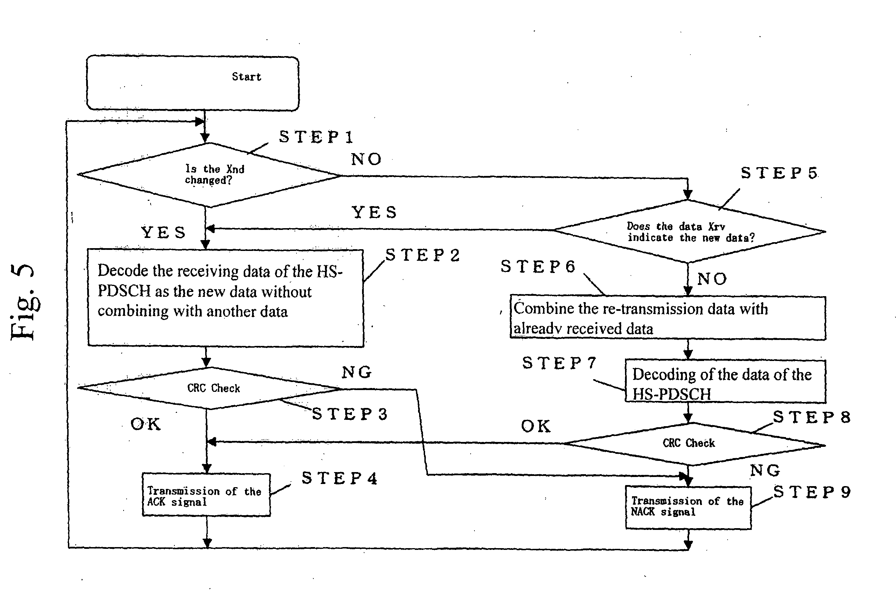

Finally, Fig. 5 illustrates a determination flow chart of new transmission and re-transmission using both Xnd and Xrv.

The control unit 47 in the mobile station determines, in the step 1, whether the $X_{nd}$ received via the HS-SCCH has changed or not. Here, when the $X_{nd}$ has changed, the process goes to the step 2 and this data is subjected, as the new data, to the decoding process of the receiving data of the HS-PDSCH without combining with the other data in the third decoding unit 46. The control unit 47 executes the CRC check for the data after the decoding process (step 3). When the CRC check is completed normally (OK), the transmitting unit not illustrated is controlled to transmit the ACK signal to the base station (step 4) and the process returns to the step 1 to execute the process for the next HS-SCCH.

Meanwhile, when the $X_{nd}$ is determined not to be varied in the step 1, the process shifts to the step 5 to determine whether the $X_{rv}$ indicates the new data or not. When the result is YES, the process shifts to the step 2, but when the result is NO, the process shifts to the step 6. In the step 6, since certainty for the data related to the re-transmission is high, the data received by the re-transmission is combined with the already received data. In the step 7, the decoding process for HS-PDSCH is also conducted with the third decoding unit 46.

After the decoding process, the CRC check is executed in the step 8. When the CRC check is completed normally (OK), the process goes to the step 4 and thereby the ACK signal is returned to the base station. On the other hand, when the CRC check is not completed normally (NG), the process goes to the step 9 and the NACK signal is returned to the base station.

When the CRC check is not completed normally (NG) in the steps 3, the process also goes to the step 9 and the NACK signal is also returned to the base station.

The first embodiment has been described above and it is also possible to introduce a common unit for the first demodulating unit 35 and the second demodulating unit 45 and also introduce a common unit for the first decoding unit 36 and second decoding unit 40.

In this case, it should be noted that the process for the signals of the same slot can also be executed easily with the time division process for same slot.

Description of the Second Embodiment

In the second embodiment, the detection accuracy of new transmission and re-transmission can be improved when the mobile station estimates the maximum number of times of re-transmission (or the time until the switching to the next new transmission from the preceding new transmission).

When the Xrv which is stored most frequently is simply used and the new transmission is determined when the particular value is received as the $X_{rv}$, follow-ing problem is sometimes generated.

For example, when the value of the maximum number of times of re-transmission (or above time) is large and the Xrv is rotated once, the transmission which should be determined as the re-transmission is erroneously determined as the new transmission because the particular value is transmitted again even in the case of the re-transmission.

Therefore, it is preferable for the control unit 47 of the mobile station to count, until the transmission of the next new data is notified with the Xnd from reception of the new data, how many times the NACK signal has been transmitted continuously or the passage of time and then store the count value or the value obtained by subtracting one (1) from the number of times of transmission (maximum number of times of re-transmission) or the passage of time. Here, the value obtained by subtracting one (1) indicates the maximum number of times of re-transmission, because the re-transmission is never conducted for the last NACK signal and the new data has been transmitted.

The control unit 47 preferably counts the number of times of continuous transmission of the NACK signal from the subsequent reception of the new data and compares the counted value with the stored count value (or passage of time) or compares the value obtained by subtracting one (1) with the maximum number of times of re- transmission and thereby determines that the transmitted data is the new data in accordance with the NACK signal received when matching is attained in above comparison.

Here, when detection is executed from passage of time, it is preferable to determine that the next receiving data is switched to the next new data by counting passage of time from reception of the new data without transmission of the ACK signal and detecting matching between the count value and the stored count value.

It is desirable to use the Xnd and Xrv for improving accuracy of the counted value to be stored. Namely, for calculation of the count value (for example the maximum number of times of re-transmission) to be stored, the number of times of continuous transmission of the NACK signal is never counted simply but the count value of the NACK signal is validated only when the HS-SCCH transmitted for the continuous transmission of all NACK signals indicates the re-transmission with the Xnd or (and) Xrv. For the last transmission of the NACK signal, the new transmission is detected by the Xnd or (and) Xrv. Therefore, the count value is validated when the new transmission is detected. It is also preferable for storing the time required for switching to the next new data to measure and store passage of time only when the HS-SCCH transmitted for continuous transmission of all NACK signals indicates the re-transmission with the Xnd or (and) Xrv.

Similarly, it is also preferable to use the Xnd and Xrv even in the determination of the new data and re-transmission data on the basis of the stored count value.

Description of the Third Embodiment

In the third embodiment, operations are considered, in which the results of new transmission and re-transmission are different in the determinations based on the Xnd and the $X_{rv}$. In this case, any one of the determination results based on the $X_{nd}$ and $X_{rv}$ is considered to be erroneous. But, when the transmission is determined here as the re-transmission, the data is combined with the received data. Therefore, in this embodiment, such transmission is determined as the new transmission.

Since the transmission is processed as the new transmission, the data is never combined with the already received data and even when the transmission is the re-transmission, the identical data can be detected on the basis of the information included in the result of decoding as the new transmission. Therefore, the duplicated output can also be prevented by deleting of the either output.

Description of the Fourth Embodiment

In the first embodiment, an improvement has been realized in the processes by the mobile station used as the communication apparatus in the receiving side, while an improvement in the processes by the base station as the communication apparatus in the transmitting side in the fourth embodiment.

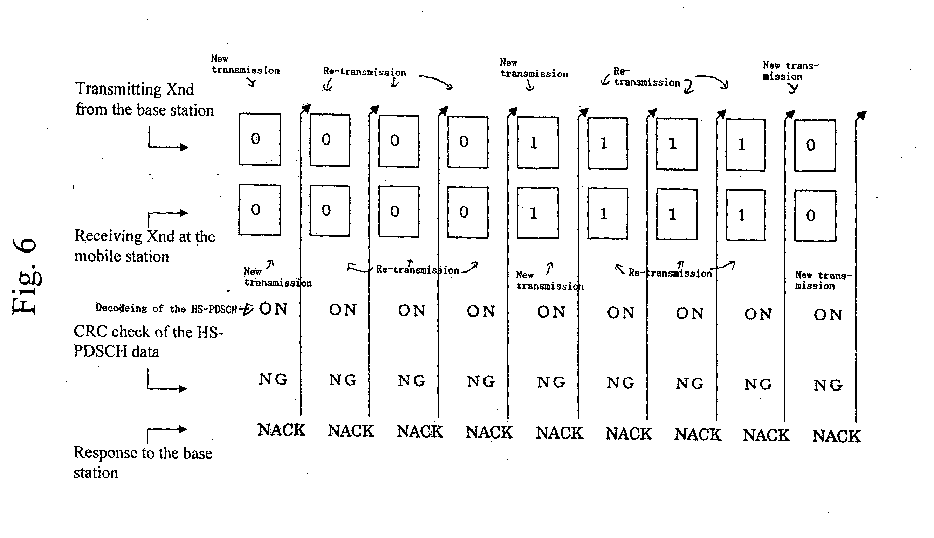

First, the normal (no receiving error in the HS-SCCH) re-transmission control will be described with reference to Fig. 6.

As illustrated in the figure, the base station transmits Xnd = 0 via the HS-SCCH, meanwhile the mobile station normally receives this data, determines that Xnd is 0, and executes the decoding of the HS-PDSCH because the CRC error is not detected in the HS-SCCH.

The CRC check is also conducted for the HS-PDSCH after the decoding but if the CRC check becomes NG due to the influence of the receiving environment or the like for the HS-PDSCH, the NACK signal is transmitted to the base station as illustrated in the figure.

Here, the maximum number of times of re-transmission is set to three (3). Therefore, when the NACK signal is received by four times from the mobile station or the ACK signal is not received by the new transmission within the predetermined period (when the overtime occurs), the base station stops the re- transmission and transmits the Xnd = 1 via the HS-SCCH in order to transmit the next new data. The mobile station receives such data Xnd = 1 normally, then determines that the data Xnd is surely 1 and executes the decoding of the HS-PDSCH because the CRC error is not detected in the HS-SCCH.

However, when the CRC check for the decoded HS-PDSCH similarly becomes NG, the NACK signal is transmitted to the base station as illustrated in the figure and the base station switches the transmission to that of the new data with the fourth reception of the NACK signal (or due to the occurrence of overtime).

As described above, when the HS-SCCH is normally received by the mobile station, there is no difference in recognition for the new transmission and re-transmission based on the data Xnd between the base station and mobile station.

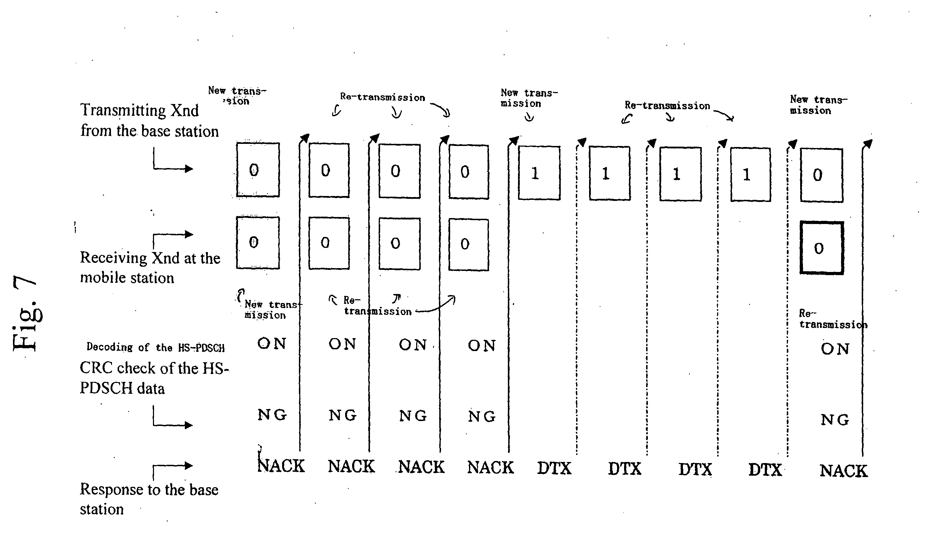

However, as illustrated in Fig. 7, if a burst error is generated in the HS-SCCH, it means that there is difference in the recognition between the new transmission and re-transmission.

Namely, the first four data $X_{nd}$ are received by the mobile station as illustrated in the figure but when the data $X_{nd} = 1$ in the fifth new data transmission where the number of times of transmission has reached the maximum number (or overtime has occurred) is not received by the mobile station (including the CRC error).

In this case, the mobile station does not perform the decoding of the HS-PDSCH and enters the DTX state where the ACK and NACK signals are not transmitted to the base station.

Accordingly, the base station automatically executes the re-transmission because the ACK signal is not received within the predetermined period from the transmission. However, such re-transmission is sometimes not received by the mobile station.

When the number of times of re-transmission exceeds the maximum number of times, the new data is further transmitted. In this case, the dada Xnd is changed to 0. When this data happens to be received normally by the mobile station, the mobile station determines the transmission as the additional re-transmission if the maximum number of times of re-transmission is not recognized and executes the decoding through combining with the data received by the first to the third receptions as the fourth re-transmission.

As described above, re-transmission is sometimes detected in the mobile station even when the transmission is conducted to notify that the data Xnd (= 0) is varied to the transmission of the new data.

In this embodiment, attention is paid to the point that if the mobile station fails to receive the HS-SCCH, namely the data Xnd and Xrv, it does not decode the HS-PDSCH and therefore it does not return the ACK signal and the NACK signal resulting in the silent condition (DTX).

In other words, the control unit 10 of the base station has previously noticed the transmission of the Nth new data for the HS-PDSCH via the HS-SCCH, but the mobile station returns neither the ACK signal nor the NACK signal. When it is determined based on the receiving condition from the receiving unit 26 that such condition has been continued until the number of times of the re-transmission reaches the maximum number of times (or until occurrence of time-over), the data Xnd is never changed for the (N+1)th new data to be transmitted next.

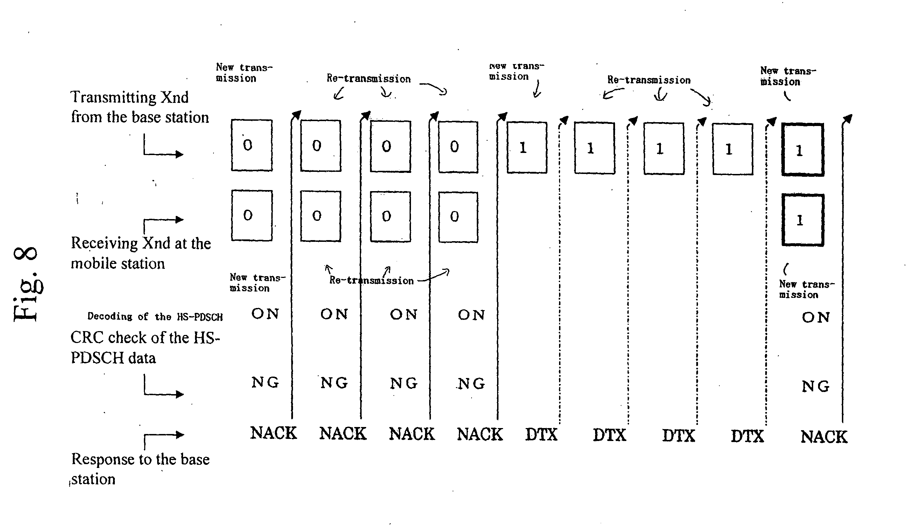

In particular, when the data 0,0,0,0 is transmitted as the Xnd for the first new data and the data 1,1,1,1 is then transmitted sequentially for the second new data as illustrated in Fig. 8, if the ACK signal and NACK signal are not transmitted from the mobile station (in the case of DTX) for the 5th to 8th data 1, the control unit 10 sets 1 as the Xnd as illustrated in Fig. 2 for the transmission by setting the Xnd to 1 in the case where the 3rd new data is transmitted next.

When the Xnd = 1 (the last Xnd) can be detected, the mobile station can detect the change to Xnd = 1 after the continuous reception of the Xnd = 0 for four times. Accordingly, reception of the new data can be determined correctly.

The condition where Xnd is set to 1 can be continuously maintained until transmission of the next fourth new data and if the ACK signal and NACK are not yet returned, such condition can also be maintained until transmission of the further next fourth new data.

Although specific embodiments of the present invention have been described, it will be understood by those of skill in the art that there are other embodiments that are equivalent to the described embodiments. Accordingly, it is to be understood that the invention is not to be limited by the specific illustrated embodiments, but only by the scope of the appended claims.

## Claims

1. A mobile station adapted to the HSDPA system, said mobile station comprising:

   a control unit operable to utilize data $X_{rv}$ received from a base station for determining whether data transmitted by HS-PDSCH relates to a new transmission or a re-transmission.

2. The mobile station according to claim 1, wherein said data $X_{rv}$ includes redundant version information and constellation version information.

3. The mobile station according to claim 1, wherein said control unit is operable to use said data $X_{rv}$, in addition to the $X_{nd}$, for said determination.

4. The mobile station according to claim 1, further comprising:

   a storage unit operable to store the received data $X_{rv}$, wherein said control unit estimates the $X_{rv}$ transmitted at the time of the new transmission based on the stored $X_{rv}$ and then uses said $X_{rv}$ for said determination.

5. The mobile station according to claim 4, wherein a value of said $X_{rv}$ is used for said estimation, when the new transmission is indicated with the $X_{nd}$, which is the bit indicating the new transmission or re-transmission.

6. The mobile station according to claim 4, wherein:

   said storage unit is operable to discriminate and store the $X_{rv}$ for each base station apparatus or base station control apparatus or routing apparatus; and
   said control unit is operable to determine under the control of which apparatus among the base station, base station control apparatus, and routing apparatus, the mobile station is placed and is operable to make said determination in accordance with the $X_{rv}$, which has been estimated as that of the new transmission on the basis of the $X_{rv}$ corresponding to the determined apparatus.

7. A mobile station adapted to the HSDPA system, said mobile station comprising:

   a control unit operable to estimate transmission of new data based on a value of a received $X_{rv}$;

   wherein said control unit is further operable to detect a rotation of the $X_{rv}$ based on the received $X_{rv}$, and, when such detection is executed, to not estimate $X_{rv}$ as the data to be related to the new data, based on the value of $X_{rv}$.

8. A mobile station utilizing the HSDPA system, said mobile station comprising;
   a control unit operable to discriminate whether data received via the HS-PDSCH relates to a new transmission or a re-transmission based on a number of times of continuous transmissions of a NACK signal.

9. The mobile station according to claim 8, wherein the number of times of continuous transmissions of said NACK signal is a number of times (N) of continuous transmissions of the NACK signal during a period from reception of new data up to reception of next new data, or the number of times obtained by subtracting one (1) from above number of times (N).

10. A mobile station adapted to the HSDPA system, said mobile station comprising;
    a control unit operable to process HS-PDSCH data as a new transmission, when a result of a determination of a new transmission or a re-transmission based on an $X_{nd}$ received from a base station is different from a result of a determination of a new transmission or a re-transmission based on the $X_{rv}$ received from the base station or that an error exists in the $X_{nd}$.

11. A mobile station for detecting transmission of next new data from a change in a predetermined bit and for detecting re-transmission of the data if a change is not detected in the predetermined bit, said mobile station comprising;

a control unit operable to determine whether received data relates to a new transmission or a re-transmission based on certain bits, wherein the certain bits do not change when the new data is transmitted and the certain bits change when the data is re-transmitted.

12. A base station adapted to the HSDPA system for notifying a mobile station that the data should be newly transmitted or re-transmitted with $X_{nd}$, said base station comprising;

a detector operable to detect that a condition in which neither an ACK signal nor a NACK signal can be received from a mobile station continues until transmission of next new data, even when transmission of the new data is indicated by the $X_{nd}$; and

a control unit operable to control, upon said detection, the transmission so that the $X_{nd}$ is transmitted without any change thereof when the next new data is transmitted.

13. A base station for notifying a mobile station of transmission of new data to the mobile station by changing a bit and also notifying of re-transmission to the mobile station without changing the bit, comprising;

a detector operable to detect that a condition in which neither an ACK signal nor a NACK signal can be received from a mobile station continues until transmission of next new data even when transmission of the new data is indicated by the change in the bit; and

a control unit operable to control, upon said detection, the transmission so that the bit is transmitted without any change thereof when the next new data is transmitted.

## Fig. 1

# Fig. 2

(1) $X_{ccs}(X_{1,1} \sim X_{1,7})$

(2) $X_{ns}(X_{1,8})$

(3) $X_{tbs}(X_{2,1} \sim X_{2,6})$

(4) $X_{hap}(X_{2,7} \sim X_{2,9})$

(5) $X_{rv}(X_{2,10} \sim X_{2,12})$

(6) $X_{nd}(X_{2,13})$

(7) $X_{ue}(X_{ue1} \sim X_{ue16})$

CRC Arithmetic Unit

CRC
4

$c_1 \sim c_{16}$

$y_{2,1} \sim y_{2,13}$

Coding Unit 1
(R=1/3)

$z_{1,1} \sim z_{1,48}$

Coding Unit 8
(R=1/2)

$b_1 \sim b_{48}$

$y_{2,14} \sim y_{2,29}$

5

Rate Matching Processing Unit 2
2

$r_{1,1} \sim r_{1,40}$

$y_{2,1} \sim y_{2,29}$

Coding Unit 6
(R=1/3)

Rate Matching Processing Unit 9

$c_1 \sim c_{40}$

$z_{2,1} \sim z_{2,111}$

3

$s_{1,1} \sim s_{1,40}$

Transmitted by the first slot.

Rate Matching Processing Unit 7
7

$r_{2,1} \sim r_{2,80}$

2〜3

Transmitted by the second to third slots

16

# Fig. 3

# Fig. 4

# Fig. 5

Start

STEP1 — Is the Xnd changed?  NO / YES

STEP2 — Decode the receiving data of the HS-PDSCH as the new data without combining with another data  YES

STEP3 — CRC Check  OK / NG

STEP4 — Transmission of the ACK signal

STEP5 — Does the data Xrv indicate the new data?  NO

STEP6 — Combine the re-transmission data with already received data

STEP7 — Decoding of the data of the HS-PDSCH

STEP8 — CRC Check  OK / NG

STEP9 — Transmission of the NACK signal

Fig. 6

| | New transmission | Re-transmission | | | New transmission | Re-transmission 2 | | | New transmission |
|---|---|---|---|---|---|---|---|---|---|
| Transmitting Xnd from the base station | 0 | 0 | 0 | 0 | 1 | 1 | 1 | 1 | 0 |
| Receiving Xnd at the mobile station | 0 | 0 | 0 | 0 | 1 | 1 | 1 | 1 | 0 |
| | New transmission | Re-transmission | | | New transmission | Re-transmission | | | New transmission |
| Decodeing of the HS-PDSCH CRC check of the HS-PDSCH data | ON | ON | ON | ON | ON | ON | ON | ON | ON |
| | NG | NG | NG | NG | NG | NG | NG | NG | NG |
| Response to the base station | NACK | NACK | NACK | NACK | NACK | NACK | NACK | NACK | NACK |

20

# Fig. 7

Transmitting Xnd from the base station

Receiving Xnd at the mobile station

Decoding of the HS-PDSCH

CRC check of the HS-PDSCH data

Response to the base station

New transmission

Re-transmission

New transmission

Re-transmission

New transmission

Re-transmission

| | | | | | | | | |
|---|---|---|---|---|---|---|---|---|
| 0 0 | 0 0 | 0 0 | 0 0 | 1 | 1 | 1 | 1 | 0 0 |
| ON | ON | ON | ON | DTX | DTX | DTX | DTX | ON |
| NG | NG | NG | NG | | | | | NG |
| NACK | NACK | NACK | NACK | DTX | DTX | DTX | DTX | NACK |

Fig. 8

| | New transmission | Re-transmission | New transmission | Re-transmission | New transmission |
|---|---|---|---|---|---|

Transmitting Xnd from the base station

| 0 | 0 | 0 | 0 | 1 | 1 | 1 | 1 | 1 |

| 0 | 0 | 0 | 0 | | | | | 1 |

Receiving Xnd at the mobile station

New transmission    Re-transmission    New transmission

Decoding of the HS-PDSCH

| ON | ON | ON | ON | | | | | ON |

CRC check of the HS-PDSCH data

| NG | NG | NG | NG | | | | | NG |

| NACK | NACK | NACK | NACK | DTX | DTX | DTX | DTX | NACK |

Response to the base station